# EUROPEAN PATENT SPECIFICATION

(11) **EP 1 056 333 B1**
(45) Date of publication and mention of the grant of the patent: **18.12.2002**
(21) Application number: 99907955.1
(22) Date of filing: 22.02.1999
(51) Int. Cl.: A01G 27/00, A01G 31/02

(54) **METHOD AND DEVICE FOR AUTOMATIC ADMINISTRATION OF LIQUID NUTRIENTS TO PLANTS**
VERFAHREN UND VORRICHTUNG ZUM SELBSTTÄTIGEN ZUFÜHREN VON FLÜSSIGEN NÄHRMITTELN AN PFLANZEN
PROCEDE ET DISPOSITIF D'ADMINISTRATION AUTOMATIQUE D'ELEMENTS NUTRITIFS LIQUIDES A DES PLANTES

(30) Priority: 20.02.1998 NL 1008377
(43) Date of publication of application: 06.12.2000
(73) Proprietor: Prodrain, 8271 PK IJsselmuiden (NL)
(72) Inventor: HEIDA, Roelof, NL-8505 AA Snikzwaag (NL); RODENBURG, Marinus, NL-7812 NJ Emmen (NL); VAN DRIEL-VERMAAS, Bastiaantje, NL-7861 CM Oosterhesselen (NL); WEZENBERG, Hermanes, NL-8271 PK Ijsselmuiden (NL)
(74) Representative: Jorritsma, Ruurd
(86) International application number: NL9900094
(87) International publication number: WO99041973

(56) References cited:
- WO-A-94/15451
- DE-A- 2 709 793
- DE-A- 4 208 954
- DE-A- 4 441 521
- DE-U- 29 619 766
- US-A- 5 241 786

## Description

The present invention relates to a method and a device for automatic administration of liquid nutrients to plants according to the preamble of claims 1 and 14.

A method and a device of the type mentioned in the preamble is known in the prior art, e.g. from US5241786. In the known system nutrients are automatically administered to a substrate when a pressure sensor detects that the weight of a tray, containing plants placed on substrate, falls below a specific minimum calibration weight.

A desired level of nutrients in a substrate can be maintained automatically with the known method. However, the possibilities of the known method are too restricted for numerous propagation and cultivation processes. In many cultivation processes for vegetables and fruit, for example in the cultivation of cucumbers, it is desirable not only that a certain minimum level of nutrients is maintained in the substrate but that in addition a certain excess of nutrients can be supplied to the substrate. The excess of nutrients is able to leak out of the substrate and is also referred to as 'drain'. Specifically, acids and salts can accumulate in the substrate during use. With the aid of the drain the substrate can, as it were, be flushed out. Consequently, the concentrations of acids and salts in the substrate can be kept below certain maxima.

It is extremely important that just sufficient nutrients are supplied to the substrate so that there is just sufficient drain to flush out the substrate. The supply of too large a quantity of nutrients firstly incurs unnecessary costs. Secondly, the excess of nutrients supplied gives rise to unnecessary pollution of the environment.

The aim of the present invention is therefore to provide a method with the aid of which liquid nutrients can be automatically administered to plants, the method also providing an automatic control of the nutrient to be supplied to achieve a desired quantity of drain.

Said aim is achieved in the present invention by a method as characterized in claim 1.

The effect of these measures is that the quantity of nutrient to be supplied to the substrate can be matched to the degree of saturation of the substrate. This means, inter alia, that either a specific minimum degree of saturation in the substrate can be maintained automatically or a surplus of nutrients can be supplied to the substrate automatically, as desired.

According to the present method, it is also advantageous that the fruit-bearing part of the plants placed in the tray is supported, so that the weight of the fruit-bearing part of the plants is not weighed with the aid of the weighing means for determining the weight of the tray.

In numerous cultivation and propagation processes the growth of the plants or of the fruits on the plants is appreciable. When determining the weight of the tray and the associated contents of the tray, the growth of the plants and/or the fruits can have an adverse effect on the accuracy of the determination. It is therefore advantageous to allow precisely the fruit-bearing part of the plants to hang free of the tray.

In this context it is possible for the weight of the fruit-bearing part of the plants to be determined with the aid of measurement means.

The effect of this measure is that the weight of the fruit-bearing part of the plants can also be used as an input signal to determine the required quantity of nutrient to be supplied. This weight of the fruit-bearing part of the plants, or its development in the time, gives an indication of the condition of the plants. In this way one can especially determine if the plants, or at least its fruit-bearing part, are drying out and/or increasing in weight too fast or too slow. The determined weight of the fruit-bearing part of the plants or its development in time can advantageously also be used for controlling other factors influencing the growth of plants, such as temperature, ventilation, (quantity of) light, air humidity, etc. These factors can be influenced by means of heating and/or cooling means, ventilation hatches, fans, lighting, (sun) screens and air humidifying means, and all said means or one or more of said means can according to the invention advantageously be controlled in dependence from the determined weight of the fruit-bearing part of the plants.

It is advantageous that during the night the specific quantity of nutrients in step e) is so chosen that the level of nutrients remains below the saturation level when the quantity of nutrients is supplied.

To allow the roots of the plants to develop fully it is important that root growth is stimulated during the night. This can be achieved by restricting the administration of the nutrients such that the level of nutrients falls during the night. So as now to prevent the substrate drying out completely during the night, it can be important also to supply nutrients during the night and specifically such that a certain minimum degree of saturation is maintained in the substrate during the night.

The substrate must not dry out completely during the night. If the level of nutrients becomes too low there is a risk that the substrate will deteriorate. That is to say the substrate mass sticks together. Additional administration of nutrients is no longer able to reverse the sticking of the substrate.

According to the present invention it is also possible during the day to select the specific quantity of nutrients in step e) with an excess such that the saturation level is exceeded when the quantity of nutrient is supplied.

In this case it is advantageous that
f) a desired quantity of nutrients which has to flow out from the discharge is determined;
g) a specific quantity of nutrients is administered to the substrate;
h) the associated quantity of nutrients which flows out from the discharge is determined;
i) a time at which the next quantity of nutrients has to be administered is calculated on the basis of the values referred to under f), g) and h).

As has already been stated above, a significant advantage of the present invention is that either a certain minimum degree of saturation is maintained or a certain drain is produced, as desired. If a specific quantity of nutrients is now supplied to the substrate and the resulting drain is measured, direct insight is obtained into the required quantity of nutrients which has to be supplied in order to be able to guarantee adequate drain. Moreover, the time at which the nutrients are supplied and the quantity of nutrients to be supplied can be adjusted immediately after each feed. This is important because the drain is dependent on fluctuating influences. One of the factors which has a substantial influence on the quantity of drain which results following a feed is the evaporation. The evaporation is defined as the proportion of the nutrients that is given off by the plants themselves. The evaporation can then be defined as follows: evaporation (in kg) = water supply (in kg) minus drain (in kg) minus increase in weight (of the fruit-bearing part) of the plants (in kg) minus increase of weight of the substrate (in kg). The evaporation is dependent, inter alia, on the amount of radiation on the plants. By means of the chosen method the quantity of nutrients to be supplied can be adjusted immediately to fluctuating circumstances, such as a change in the radiation.

According to the present invention it is furthermore advantageous that
j) the salt and/or the acid content in the substrate is determined;
k) the desired quantity of nutrients that has to flow out from the discharge is determined as a function of the salt or acid content determined.

The advantage of this measure is that the quantity of nutrients to be supplied is by this means made dependent on the salt and/or acid content in the substrate. If the salt content in the substrate is high there will be a greater requirement for drain than if said salt content is low. The quantity of nutrient to be supplied is further optimised by means of the chosen method.

According to the present invention it is also possible for calibration according to step c) to be carried out at the start of the day.

The calibration according to step c) can, especially at the start of the day, advantageously be carried out by
l) supplying nutrients to the substrate until fluid begins to flow from the discharge of the tray;
m) determining the calibration weight of the tray at the point in time when the fluid starts to flow from the discharge.

According to the present invention, at the start of the day there will be a change-over from maintenance of a relatively low level of nutrients in the substrate to a relatively high level of nutrients, a certain degree of drain also being ensured. By means of the chosen method it will be possible to optimise the supply of the desired quantity of drain immediately at the start of the day. By means of the chosen calibration method, the supply of nutrients is immediately adjusted to any change in circumstances in or around the substrate.

The calibration according to step c) can, especially at the start of the night, advantageously be carried out by
n) administering nutrients to the substrate at least until a certain quantity of nutrients flows out from the discharge;
o) allowing the tray to drain;
p) determining the calibration weight of the tray with contents at the point in time when the tray has just stopped leaking or nutrients have just stopped issuing from the discharge.

The advantage of this method is that at the point in time when the change-over takes place from maintenance of a relatively high level of nutrients to a relatively low level of nutrients a measurement of the saturation level of the substrate at that instant is available. The quantity of nutrients to be supplied to achieve the relatively high level of nutrients can then be related to this measurement.

The aim of the present invention is, furthermore, to provide a device for carrying out the method.

Said aim is achieved in the present invention by a device for automatic administration of liquid nutrients to plants, as characterized in claim 14.

The control means in the devices can comprise any suitable processor, chip, computer or other suitable means.

The device according to the present invention is improved in that the device comprises measurement means for measuring the quantity of nutrients which flow out from the discharge, said measurement means being actively linked to said control means.

With this arrangement it is advantageous that the discharge flows out into a collection tray and that said measurement means for measuring the quantity of nutrients comprise weighing means for weighing said collection tray.

A robust, accurate and relatively inexpensive construction of the device is achieved in this way.

Furthermore, according to the present invention it is possible that the device contains means for supporting the fruit-bearing part of the plants placed in the tray, wherein said means are arranged such that fluctuations in the weight of the fruit-bearing part of the plants are not included in the weight recorded with the aid of the weighing means for determining the weight of the tray.

What is achieved as a result of this measure is that changes in the weight of the plants themselves do not interfere with the determination of the weight of the tray.

The device according to the invention can be further improved in that the fruit-bearing part of the plants is attached with the aid of a guide to a measurement sensor, said measurement sensor being actively linked to said control means.

What is achieved as a result of this measure is that the increase in the weight of the plants can also be determined. By making use of the guide, which is usually present in any case, the measurement sensor can easily be incorporated in a conventional propagation system.

The present invention is also suitable for registration of the control of the system with the aid of software. The present invention therefore also relates to a computer-readable medium, said medium comprising a computer program, which after loading on a device according to one of Claims 11 to 14 provided with computer means provides the device with the functionality of the method according to one of Claims 1 to 10.

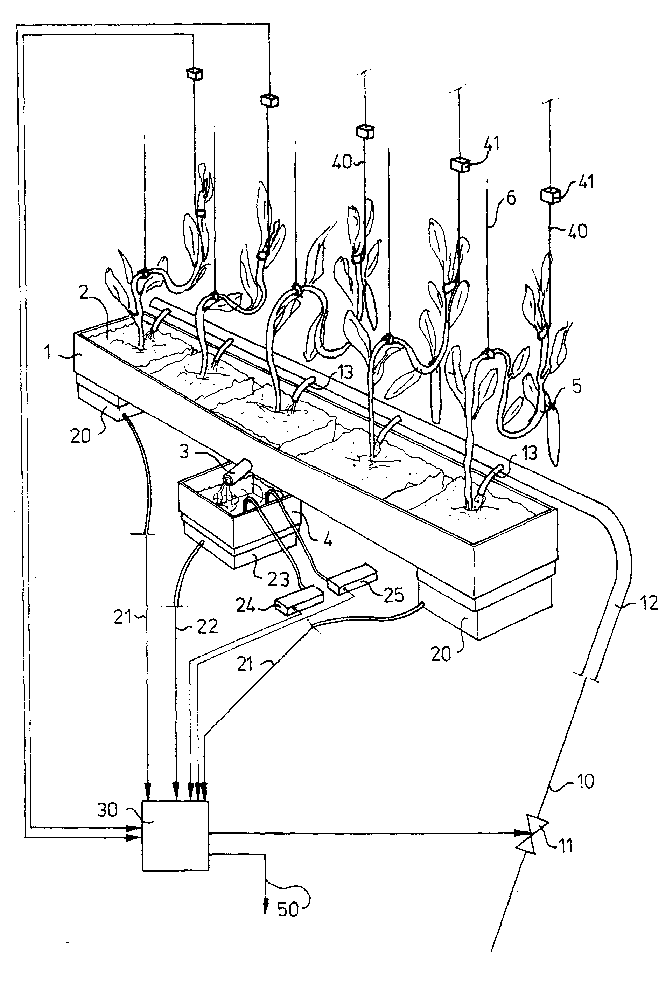

A possible embodiment will be discussed below, by way of example, with reference to the appended drawing, in which a device for carrying out the method according to the present invention is shown diagrammatically.

A tray 1 with a substrate 2 therein is shown in the drawing. The tray 1 is, for example, made of stainless steel. The tray 1 has a discharge 3 at the bottom. The discharge 3 can, for example, be constituted by outflow openings which have been made in the bottom of the tray, or by a discharge 3 as in the case shown. The discharge 3 flows out, for example, into a collection tray 4.

The substrate 2 can consist of any suitable absorbent material, such as a plastic foam, mineral wool, earth or any other suitable material. The substrate 2 can form an integral whole or can consist of individual elements.

The tray 1 is supported on either side by scales 20. The weight of the tray with the contents thereof can be determined with the aid of the scales 20. The scales 20 used are preferably robust, preferably have high mechanical strength and preferably have high measurement accuracy (for example of 2 - 5 gram).

The collection tray 4 is also supported by scales 23. As a result the weight of nutrients that have flowed out from the discharge 3 can also be determined.

In use, one or more plants 5 are placed on the substrate 2. The fruit-bearing part of said plants 5 can be supported with the aid of supports 6. The supports 6 can, for example, comprise vertically tensioned wires. What is achieved by this means is that the weight of the fruit-bearing part of the plants 5 is not determined by the scales 20. The fruit-bearing part of the plants 5 can be guided around vertically tensioned wires 40. Said wires can be attached at the top to measurement sensors 41. The effect of this measure is that the weight of the fruit-bearing part of the plants 5 can be determined, for example periodically, with the aid of the measurement sensors 41.

Meters 24, 25 for determining the degree of acidity and the salt content of the nutrients, such as the water, in the system are also positioned in the tray 1, in the discharge 3, in the collection tray 4 or in another suitable location. The degree of acidity can, for example, be determined with the aid of a standard pH meter, for example filled with KCI. The salt content can be determined using a standard meter which, for example, is able to determine the electrical conductivity of the nutrients, such as the water.

A system of lines, indicated diagrammatically by 10, is provided in order to be able to provide the plants 5 placed in the tray with nutrient, such as water. The line system incorporates at least one pump. The line system 10 is connected at one end to a source of liquid nutrient (not shown) and at the other end opens into a pipe 12 which is provided with one or more outflow openings, for example provided with hoses 13.

The scales 20 and 23, the measurement sensors 41 and the meters 24 and 25 are connected with the aid of, for example, leads 21,22 to control means 30. Said control means 30 comprise a processing unit, such as a processor, a PC or any other suitable means, which is able to process the data generated by the meters. The control means also contain a display, such as a monitor, in order to be able to display the data measured by the meters and the data calculated by the computer. Furthermore, the control means 30 are, in turn, connected to the feed means 10, 11, 12, 13 for the liquid nutrients. With the aid of the control means it is possible, for example, to operate the valve 11 so as to be able to control supply of nutrients to the tray 1.

The device as shown in the drawing operates as follows: A user determines the desired quantity of nutrients which has to be supplied to the plants over 24 hours depending on the type of plants 5 in, for example, a greenhouse.

For example:
24.00 - 07.00 hours: tray 40% filled with nutrients, no drain
07.00 - 10.00 hours: tray 100% filled with nutrients, no drain
10.00 - 12.00 hours: tray 100% filled with nutrients, 20% drain
12.00 - 15.00 hours: tray 100% filled with nutrients, 40% drain
15.00 - 18.00 hours: tray 100% filled with nutrients, 20% drain
18.00 - 22.00 hours: tray 100% filled with nutrients, no drain
22.00 - 24.00 hours: tray 40% filled with nutrients, no drain
In this context the saturation level is the maximum quantity of nutrients which the substrate is able to absorb. Additional nutrients supplied will flow out of the substrate.

In order to be able actually to comply with the above desired schedule, during the transition from day to night (18.00 - 22.00 hours) nutrient is supplied to the tray in a quantity such that the tray produces drain. The tray 1 is then able to drain. The weight of the tray is determined at the point in time when there is no further drain from the tray. The measured value is a new calibration value for the weight of the tray 1 at the point in time when the substrate is completely saturated. Thus, all, possibly changed, circumstances in the tray, such as, for example, root growth, are incorporated in this calibration value. This calibration value can be used during the night to guarantee a certain desired level of nutrients in the tray 1. Because the weight of the tray 1 is determined by the scales 20 it is possible, by means of intervention of the control means 30, to control the supply of the nutrients to the tray on the basis of the weight of the tray 1 at a given point in time such that the weight of the tray 1 with contents remains relatively constant and, thus, that the level of nutrients in the tray is relatively constant.

During the transition from night to day, for example between 06.00 and 08.00 hours, nutrient is once again supplied to the tray until the tray starts to leak. The weight of the tray is determined at the point in time when the tray 1 just starts to leak and the weight of the tray determined at that point in time can then serve as new calibration weight for control of the nutrient supply.

When, in accordance with the above schedule, a certain amount of drain is desired during the day, the calibration weight can be used as the starting point for the quantity of nutrient to be supplied. Since the conditions in, for example, the greenhouse can change, the quantity of drain which follows the supply of nutrients can deviate from the predicted and desired value. This can, for example, be the consequence of more intensive radiation (very hot day) than was anticipated. Because the actual drain is also measured in the present method, the quantity of nutrient to be supplied can be adjusted so as to produce a quantity of drain which is as close as possible to the desired quantity. For adjustment of the quantity of nutrient to be supplied it is, for example, possible at the point in time when surplus drain is determined for a given supply to deduct the surplus drain from the threshold value which is being used at that point in time before supplying the next quantity. By lowering the threshold value in this way the quantity of drain which is determined for the next feed will decrease.

Because the degree of acidity (pH value) and the salt content (EC value) are also determined in the system, the quantity of nutrient to be supplied can also be adjusted on the basis of any measured deviations in these values. If the degree of acidity becomes too high, it is possible, for example, to shorten the metering time, i.e. the time between two successive meterings. In this context it is preferable that control is not on the basis of the degree of acidity or salt determination at a particular point in time but that the change in the degree of acidity or the salt content is used as control input. In general, it will be the case that the higher the deviation in acidity or salt content, the greater will be the drain desired. The desired drain and the associated quantity of nutrient to be supplied can, if desired, be adjusted continuously.

Since, in the present method, the weight of the plants 5 themselves is also determined with the aid of the measurement sensors 41, the weight of the plants can also be used as input signal for metering of the quantity of nutrient to be supplied. Furthermore, the weight of the plants itself or development of said weight can also be used for controlling (in the figure designated by signal wire 50) screens (which keep up entirely or partly light coming from outside) and/or lighting means and/or ventilation means. The weight of the plants itself or its development gives an indication of the condition of the plants itself. In this manner, one is for example able to observe that the plants are evaporating too much or drying out (their weight decreases), which as such can in a more or less degree be independent from the water supply and in that case are to be dealt with by other means (influencing the ventilation, surrounding temperature, light).

If the system according to the invention is employed in the case of cultivation in, for example, greenhouses, not every plant will be placed in a tray 1. Per unit surface area, the optimum quantity of feed to be supplied will be determined on a limited number of 'control plants' which are placed in a tray 1. The conditions in the relatively small tray 1 are thus the determining factor for the administration of nutrients to a relatively large number of plants. It is therefore best that the administration to the 'control plants' is carried out with a great deal of care and that the conditions of the plant growth in the tray are accurately determined, and that is possible with the device shown in the figure.

## Claims

1. Method for automatic administration of liquid nutrients to plants (5), wherein said plants (5) are placed on an absorbent substrate (2) that has been placed in a tray (1) which is provided with at least one discharge (3), wherein said method comprises the following steps:
a) administration of a quantity of nutrients to the substrate (2),
b) determination of the weight of the tray (1),
c) determination of a calibration weight for the tray and contents thereof,
d) determination of a threshold value for the weight of the tray (1) and the contents thereof on the basis of the calibration weight determined in c);
e) a specific quantity of nutrients is administered when said weight falls below the threshold value,
**characterised in that**
step c) is carried out by determining the saturation level of the substrate (2) and taking as the calibration weight the weight of the tray (1) and the contents thereof at the point in time when the saturation level is reached.

2. Method according to claim 1, **characterised in that** the fruit-bearing part of the plants (5) placed in the tray (1) is supported, so that the weight of the fruit-bearing part of the plants (5) is not weighed with the aid of the weighing means (20) for determining the weight of the tray (1).

3. Method according to one of the preceding claims, **characterised in that** the weight of the fruit-bearing part of the plants (5) is determined with the aid of measurement means (41).

4. Method according to claim 3, **characterised in that** one or more factors determining the growth of the plants, such as temperature, ventilation, light, air humidity, is respectively are influenced or controlled in dependence from the measured weight of the fruit-bearing part of the plants.

5. Method according to one of the preceding claims, **characterised in that** during the night the specific quantity of nutrients in step e) is so chosen that the level of nutrients remains below the saturation level when the quantity of nutrients is supplied.

6. Method according to one of the preceding claims, **characterised in that** during the day the specific quantity of nutrients in step e) is selected with an excess such that the saturation level is exceeded when the quantity of nutrient is supplied.

7. Method according to Claim 6, **characterised in that**
f) a desired quantity of nutrients which has to flow out from the discharge (3) is determined;
g) a specific quantity of nutrients is administered to the substrate (2);
h) the associated quantity of nutrients which flows out from the discharge (3) is determined;
i) a time at which the next quantity of nutrients has to be administered is calculated on the basis of the values referred to under f), g) and h).

8. Method according to one of the preceding claims, **characterised in that**
j) the salt or the acid content in the substrate (2) is determined;
k) the desired quantity of nutrients that has to flow out from the discharge (3) is determined as a function of the salt or acid content determined.

9. Method according to one of the preceding claims, **characterised in that** the calibration according to step c) is carried out at the start of the day.

10. Method according to one of the preceding claims, **characterised in that** the calibration according to step c) is carried out by
l) supplying nutrients to the substrate until nutrient begins to flow from the discharge (3) of the tray (1);
m) determining the calibration weight of the tray at the point in time when the nutrient starts to flow from the discharge (3).

11. Method according to one of the preceding claims, **characterised in that** the calibration according to step c) is carried out at the start of the night.

12. Method according to one of the preceding claims, **characterised in that**
n) nutrients are administered to the substrate (2) at least until a certain quantity of nutrients flows out from the discharge (3);
o) the tray (1) is allowed to drain;
p) the calibration weight of the tray (1) with contents is determined at the point in time when the tray (1) has just stopped leaking or nutrients have just stopped issuing from the discharge (3).

13. Method according to one of the preceding claims, **characterised in that** one measures the quantity of nutrients flowing out from the discharge.

14. Device for automatic administration of liquid nutrients to plants (5), comprising
- a tray (1), provided with at least one discharge (3),
- substrate (2) placed in said tray (1), plants (5) being placed on said substrate (2) during use,
- weighing means (20) for weighing the tray (1) with contents,
- means (10, 11, 12, 13) for administering nutrients to said substrate (2),
- calibration means for determining a calibration weight for the tray and contents thereof,
- control means (30) on the one hand actively linked to the weighing means (20) on the other hand adapted for determining a threshold value for the weight of the tray and contents thereof on the basis of the calibration weight and for controlling the means (10,11,12,13) for administration of nutrients to said plants (5) when the weight measured by the weighing means (20) falls below the threshold value,
**characterised in that**
the control means are further adapted for taking as the calibration weight the weight of the tray and contents thereof at the point in time the saturation level of the substrate is reached.

15. Device according to Claim 14, **characterised in that** the device comprises measurement means (23) for measuring the quantity of nutrients which flows out from the discharge (3), said measurement means (23) being actively linked to said control means (30).

16. Device according to Claim 143 or 15, **characterised in that** the discharge (3) flows out into a collection tray (4) and that said measurement means for measuring the quantity of nutrients comprise weighing means (23) for weighing said collection tray (4).

17. Device according to Claim 14, 15 or 16, **characterised in that** the device contains means (6) for supporting the fruit-bearing part of the plants (5) placed in the tray (1), wherein said means (6) are arranged such that fluctuations in the weight of the fruit-bearing part of the plants (5) are not included in the weight recorded with the aid of the weighing means (20) for determining the weight of the tray (1).

18. Device according to one of Claims 14 to 17, **characterised in that** the fruit-bearing part of the plants (5) is attached with the aid of a guide (40) to a measurement sensor (41), said measurement sensor (41) being actively linked to said control means (30).

19. Computer-readable medium, **characterised in that** said medium comprises a computer program, which after loading on a device according to one of Claims 14 to 18 provided with computer means provides the device with the functionality of the method according to one of Claims 1 to 13.

## Patentansprüche

1. Verfahren zur automatischen Zuführung flüssiger Nährstoffe zu Pflanzen (5), bei welchem die Pflanzen (5) sich in einem absorbierenden Substrat (2) befinden, welches in eine Wanne (1) gesetzt ist, die mit mindestens einem Abfluss (3) versehen ist, mit den folgenden Schritten:
a) Zuführung einer Menge von Nährstoffen zum Substrat (2),
b) Bestimmung des Gewichts der Wanne (1),
c) Bestimmung eines Sollgewichtes für die Wanne samt Inhalt,
d) Bestimmung eines Schwellwertes für das Gewicht der Wanne (1) samt Inhalt aufgrund des in Schritt c) bestimmten Sollgewichtes,
e) Zuführung einer bestimmten Nährstoffmenge, wenn das Gewicht unter den Schwellwert fällt,
**dadurch gekennzeichnet,**
**dass** Schritt c) ausgeführt wird durch Bestimmung des Sättigungsgehalts des Substrats (2) und Benutzung des Gewichts der Wanne (1) samt Inhalt zum Zeitpunkt, wo der Sättigungsgehalt erreicht ist, als das Sollgewicht.

2. Verfahren nach Anspruch 1, **dadurch gekennzeichnet, dass** der fruchttragende Teil der in der Wanne (1) befindlichen Pflanzen (5) abgestützt wird, so dass das Gewicht des fruchttragenden Teils der Pflanzen (5) nicht von der für die Bestimmung des Gewichts der Wanne (1) benutzten Waage gewogen wird.

3. Verfahren nach einem der vorstehenden Ansprüche, **dadurch gekennzeichnet, dass** das Gewicht des fruchttragenden Teils der Pflanzen (5) mit Hilfe einer Messeinrichtung (41) bestimmt wird.

4. Verfahren nach Anspruch 3, **dadurch gekennzeichnet, dass** einer oder mehrere der für das Pflanzenwachstum maßgeblichen Faktoren wie Temperatur, Belüftung, Licht, Luftfeuchtigkeit, jeweils in Abhängigkeit von dem gemessenen Gewicht des fruchttragenden Teils der Pflanzen beeinflusst oder gesteuert wird.

5. Verfahren nach einem der vorstehenden Ansprüche, **dadurch gekennzeichnet, dass** während der Nacht die bestimmte Nährstoffmenge gemäß Schritt e) so gewählt wird, dass der Nährstoffgehalt unter dem Sättigungsgehalt bleibt, wenn die Nährstoffmenge zugeführt wird.

6. Verfahren nach einem der vorstehenden Ansprüche, **dadurch gekennzeichnet, dass** während des Tags die bestimmte Nährstoffmenge gemäß Schritt e) mit einem Überschuss gewählt wird, so dass der Sättigungsgehalt überschritten wird, wenn die Nährstoffmenge zugeführt wird.

7. Verfahren nach Anspruch 6, **dadurch gekennzeichnet, dass**
f) eine gewünschte Nährstoffmenge, die aus dem Abfluss (3) ausfließen soll, bestimmt wird,
g) eine bestimmte Nährstoffmenge dem Substrat (2) zugeführt wird,
h) die zugehörige Nährstoffmenge, die aus dem Abfluss (3) ausfließt, bestimmt wird,
i) ein Zeitpunkt, zu welchem die nächste Nährstoffmenge zuzuführen ist, aufgrund der in den Schritten f), g) und h) angegebenen Werte berechnet wird.

8. Verfahren nach einem der vorstehenden Ansprüche, **dadurch gekennzeichnet, dass**
j) Salz- und Säuregehalt im Substrat (2) bestimmt werden,
k) die gewünschte Nährstoffmenge, welche aus dem Abfluss (3) herausfließen soll, als Funktion des bestimmten Salz- und Säuregehaltes bestimmt wird.

9. Verfahren nach einem der vorstehenden Ansprüche, **dadurch gekennzeichnet, dass** die Sollwert-Bestimmung gemäß Schritt c) am Tagesbeginn durchgeführt wird.

10. Verfahren nach einem der vorstehenden Ansprüche, **dadurch gekennzeichnet, dass** die Sollwert-Bestimmung gemäß Schritt c) ausgeführt wird durch
l) Zuführung von Nährstoffen zum Substrat, bis Nährstoff aus dem Abfluss (3) der Wanne (1) herauszufließen beginnt,
m) Bestimmung des Sollgewichtes der Wanne zu dem Zeitpunkt, wo der Nährstoff aus dem Abfluss (3) herauszulaufen beginnt.

11. Verfahren nach einem der vorstehenden Ansprüche, **dadurch gekennzeichnet, dass** die Sollwert-Bestimmung gemäß Schritt c) zu Beginn der Nacht durchgeführt wird.

12. Verfahren nach einem der vorstehenden Ansprüche, **dadurch gekennzeichnet, dass**
n) dem Substrat (2) Nährstoff mindestens solange zugeführt wird, bis eine bestimmte Nährstoffmenge aus dem Abfluss (3) herausfließt,
o) der Wanne (1) ein Ausfließen durch den Abfluss erlaubt wird,
p) das Sollgewicht der wanne (1) samt Inhalt zu dem Zeitpunkt bestimmt wird, wo das Auslaufen der Wanne (1) gerade aufhört oder Nährstoffe gerade aufhören, aus dem Abfluss (3) herauszufließen.

13. Verfahren nach einem der vorstehenden Ansprüche, **dadurch gekennzeichnet, dass** die Menge des aus dem Abfluss herausfließenden Nährstoffes gemessen wird.

14. Vorrichtung zur automatischen Zuführung flüssiger Nährstoffe zu Pflanzen (5) mit
- einer Wanne (1), die mit mindestens einem Abfluss (3) versehen ist,
- ein in der Wanne (1) angeordnetes Substrat (2) und mit im Gebrauch auf dem Substrat (2) befindlichen Pflan2en (5),
- einer Wiegevorrichtung (20) zum Wiegen der Wanne (1) samt Inhalt,
- einer Vorrichtung (10,11,12,13) zum Zuführen von Nährstoffen zum Substrat (2),
- einer Kalibriervorrichtung zum Bestimmen eines Sollgewichtes für die Wanne samt Inhalt,
- einer Steuereinrichtung (30), die einerseits aktiv mit der Wiegevorrichtung (20) verbunden ist und andererseits geeignet ist, einen Schwellwert für das Gewicht der Wanne samt Inhalt auf Grundlage des sollgewichtes zu bestimmen und die Vorrichtung (10,11,12,13) zur Zuführung von Nährstoffen zu den Pflanzen (7) zu steuern, wenn das von der Wiegevorrichtung (20) gemessene Gewicht unter den Schwellwert fällt,
**dadurch gekennzeichnet, dass** die Steuereinrichtung weiterhin geeignet ist, als das Sollgewicht dasjenige Gewicht von Wanne samt Inhalt zu dem Zeitpunkt zu verwenden, wo der Sättigungsgehalt des Substrats erreicht wird.

15. Vorrichtung nach Anspruch 14, **dadurch gekennzeichnet, dass** sie eine Messeinrichtung (23) zum Messen der Nahrstoffmenge enthält, welche aus dem Abfluss (3) herausfließt, wobei die Messeinrichtung (23) mit der Steuereinrichtung (30) aktiv verbunden ist.

16. Vorrichtung nach Anspruch 14 oder 15, **dadurch gekennzeichnet, dass** der Abfluss (3) in eine Sammelwanne (4) mündet und dass die Messeinrichtung zum Messen der Nährstoffmenge eine Wiegevorrichtung (23) zum Wiegen der Sammelwanne (4) aufweist.

17. Vorrichtung nach Anspruch 14, 15 oder 16, **dadurch gekennzeichnet, dass** sie eine Einrichtung (6) zur Abstützung des fruchttragenden Teils der in der Wanne (1) befindlichen Pflanzen aufweist, welche so eingerichtet ist, dass Gewichtsänderungen des fruchttragenden Teils der Pflanzen (5) nicht in das Gewicht eingehen, welches von der zur Bestimmung des Gewichts der Wanne (1) dienenden Wiegevorrichtung (20) gemessen wird.

18. Vorrichtung nach einem der Ansprüche 14 bis 17, **dadurch gekennzeichnet, dass** der fruchttragende Teil der Pflanzen (5) über Führungsmittel (40) mit einer Messeinrichtung (41) verbunden ist, welche ihrerseits aktiv mit der Steuereinrichtung (30) verbunden ist.

19. Computerlesbares Medium, **dadurch gekennzeichnet, dass** das Medium ein Computerprogramm enthält, welches nach dem Laden in eine mit einem Computer versehene Vorrichtung gemäß einem der Ansprüche 14 bis 18 die Vorrichtung nach dem Verfahren nach einem der Ansprüche 1 bis 13 arbeiten lässt.

## Revendications

1. Procédé d'administration automatique d'éléments nutritifs liquides à des plantes (5), selon lequel lesdites plantes (5) sont placées sur un substrat absorbant (2) disposé dans un plateau (1) comprenant au moins un drain (3), lequel procédé comprend les étapes suivantes :
a) administrer une certaine quantité d'éléments nutritifs au substrat (2) ;
b) déterminer le poids du plateau (1) ;
c) déterminer un poids d'étalonnage du plateau et de son contenu ;
d) déterminer une valeur seuil pour le poids du plateau (1) et de son contenu en fonction du poids d'étalonnage déterminé en c) ;
e) administrer une quantité spécifique d'éléments nutritifs lorsque ledit poids tombe en dessous de la valeur seuil ;
**caractérisé en ce que** l'étape c) s'effectue en déterminant le niveau de saturation du substrat (2) et en prenant comme poids d'étalonnage le poids du plateau (1) et de son contenu au moment où le niveau de saturation est atteint.

2. Procédé, selon la revendication 1, **caractérisé en ce que** la partie porteuse de fruits des plantes (5) placées dans le plateau (1) est soutenue de sorte que le poids de la partie porteuse de fruits des plantes (5) ne soit pas pesé par le moyen de pesage (20) servant à déterminer le poids du plateau (1).

3. Procédé, selon l'une des revendications précédentes, **caractérisé en ce que** le poids de la partie porteuse de fruits des plantes (5) est déterminé à l'aide d'un moyen de mesure (41).

4. Procédé, selon la revendication 3, **caractérisé en ce qu'**un ou plusieurs facteurs déterminant la croissance des plantes, tels que la température, la ventilation, la lumière, l'humidité de l'air, respectivement, sont influencés ou gérés en fonction du poids mesuré de la partie porteuse de fruits des plantes.

5. Procédé, selon l'une des revendications précédentes, **caractérisé en ce que**, pendant la nuit, la quantité spécifique d'éléments nutritifs de l'étàpe e) est choisie de sorte que le niveau d'éléments nutritifs demeure en dessous du niveau de saturation lorsque la quantité d'éléments nutritifs est administrée.

6. Procédé, selon l'une des revendications précédentes, **caractérisé en ce que**, pendant la journée, la quantité spécifique d'éléments nutritifs de l'étape e) est choisie de manière à comprendre un excédent de sorte que le niveau de saturation soit dépassé lorsque la quantité d'éléments nutritifs est administrée.

7. Procédé, selon la revendication 6, **caractérisé en ce que** :
f) on détermine une quantité voulue d'élément nutritifs devant s'écouler par le drain (3) ;
g) on administre une quantité spécifique d'éléments nutritifs au substrat (2) ;
h) on détermine la quantité associée d'éléments nutritifs qui s'écoule par le drain (3) ; et
i) on calcule le moment auquel la prochaine quantité d'éléments nutritifs doit être administrée en fonction des valeurs mentionnées en f), g) et h).

8. Procédé, selon l'une des revendications précédentes, **caractérisé en ce que** :
j) on détermine la teneur en sel ou en acides du substrat (2) ;
k) on détermine la quantité voulue d'éléments nutritifs devant s'écouler par le drain (3) en fonction de la teneur en sel ou en acides déterminée.

9. Procédé, selon l'une des revendications précédentes, **caractérisé en ce que** l'étalonnage de l'étape c) s'effectue au début de la journée.

10. Procédé, selon l'une des revendications précédentes, **caractérisé en ce que** l'étalonnage de l'étape c) s'effectue :
l) en envoyant des éléments nutritifs au substrat jusqu'à ce que les éléments nutritifs commencent à s'écouler par le drain (3) du plateau (1) ;
m) en déterminant le poids d'étalonnage du plateau au moment où les éléments nutritifs commencent à s'écouler par le drain (3).

11. Procédé, selon l'une des revendications précédentes, **caractérisé en ce que** l'étalonnage de l'étape c) s'effectue au début de la nuit.

12. Procédé, selon l'une des revendications précédentes, **caractérisé en ce que** :
n) les éléments nutritifs sont administrés au substrat (2) au moins jusqu'à ce qu'une certaine quantité d'éléments nutritifs s'écoule par le drain (3) ;
o) on laisse le plateau (1) se drainer ;
p) le poids d'étalonnage du plateau (1) et de son contenu est déterminé au moment où l'écoulement du plateau (1) vient juste de se terminer ou au moment où les éléments nutritifs viennent juste de cesser de s'écouler par le drain (3).

13. Procédé, selon l'une des revendications précédentes, **caractérisé en ce que** l'on mesure la quantité d'éléments nutritifs s'écoulant par le drain.

14. Dispositif d'administration automatique d'éléments nutritifs liquides à des plantes (5), comprenant :
- un plateau (1) comportant au moins un drain (3) ;
- un substrat (2) placé dans ledit plateau (1), tandis que des plantes (5) sont placées sur ledit substrat (2) pendant l'utilisation ;
- un moyen de pesage (20) permettant de peser le plateau (1) et son contenu ;
- des moyens (10, 11, 12, 13) permettant d'administrer des éléments nutritifs au substrat (2) ;
- un moyen d'étalonnage permettant de déterminer un poids d'étalonnage du plateau et de son contenu ;
- des moyens de commande (30) qui sont, d'une part, connectés activement au moyen de pesage (20), et qui sont, d'autre part, conçus de façon à déterminer une valeur seuil pour le poids du plateau et de son contenu en fonction du poids d'étalonnage et de façon à commander les moyens (10, 11, 12, 13) servant à administrer les éléments nutritifs aux dites plantes (5) lorsque le poids mesuré par le moyen de pesage (20) descend en dessous de la valeur seuil ;
**caractérisé en ce que** les moyens de commande sont en outre conçus de façon à considérer comme poids d'étalonnage le poids du plateau et de son contenu au moment où l'on atteint le niveau de saturation du substrat.

15. Dispositif, selon la revendication 14, **caractérisé en ce qu'**il comprend des moyens de mesure (23) permettant de mesurer la quantité d'éléments nutritifs qui s'écoule par ledit drain (3), lesquels moyens de mesure (23) sont connectés activement aux dits moyens de commande (30).

16. Dispositif, selon la revendication 14 ou 15, **caractérisé en ce que** le drain (3) s'écoule dans un plateau de récupération (4), et **en ce que** lesdits moyens de mesure servant à mesurer la quantité d'éléments nutritifs comprennent un moyen de pesage (23) permettant de peser ledit plateau de récupération (4).

17. Dispositif, selon la revendication 14, 15 ou 16, **caractérisé en ce qu'**il comprend des moyens (6) permettant de supporter la partie porteuse de fruits des plantes (5) placées dans le plateau (1), lesquels moyens (6) sont disposés de sorte que les fluctuations du poids de la partie porteuse de fruits des plantes (5) ne soient pas prises en compte dans le poids enregistré à l'aide du moyen de pesage (20) servant à déterminer le poids du plateau (1).

18. Dispositif, selon l'une des revendications 14 à 17, **caractérisé en ce que** la partie porteuse de fruits des plantes (5) est attachée à l'aide d'un guide (40) à un capteur de mesure (41), lequel capteur de mesure (41) est connecté activement aux dits moyens de commande (30).

19. Support pouvant être lu par ordinateur, **caractérisé en ce que** ledit support contient un programme informatique qui, une fois chargé dans un dispositif selon l'une des revendications 14 à 18 et comprenant un moyen informatique, confère au dispositif les fonctions d'un procédé selon l'une des revendications 1 à 13.
